(19) Europäisches Patentamt

European Patent Office

Office européen des brevets

(11) **EP 4 510 683 A1**

(12) **EUROPEAN PATENT APPLICATION**
published in accordance with Art. 153(4) EPC

(43) Date of publication:
**19.02.2025 Bulletin 2025/08**

(21) Application number: **23802697.5**

(22) Date of filing: **28.04.2023**

(51) International Patent Classification (IPC):
*H04W 24/08* (2009.01)

(52) Cooperative Patent Classification (CPC):
**H04W 24/08; H04W 52/02; H04W 72/0453;
H04W 72/1263**

(86) International application number:
**PCT/CN2023/091644**

(87) International publication number:
**WO 2023/216925 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.05.2022 CN 202210510596**

(71) Applicant: **Huawei Technologies Co., Ltd.
Shenzhen, Guangdong 518129 (CN)**

(72) Inventors:
• **ZHOU, Baojian
Shenzhen, Guangdong 518129 (CN)**

• **LUO, Jiajin
Shenzhen, Guangdong 518129 (CN)**
• **PENG, Xiaohui
Shenzhen, Guangdong 518129 (CN)**
• **LYU, Yongxia
Shenzhen, Guangdong 518129 (CN)**
• **YAN, Min
Shenzhen, Guangdong 518129 (CN)**
• **YANG, Xun
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **ENVIRONMENT IMAGING METHOD AND RELATED APPARATUS**

(57) An environmental imaging method and a related apparatus are provided. The method includes: A first device sends first indication information to a second device, where the first indication information indicates a first spatial location at which the second device is supposed to send a measurement signal, and the first spatial location is evenly distributed in an azimuth direction and/or at an azimuth angle; the first device receives an echo signal, where the echo signal is a signal formed by reflecting, by a target, the measurement signal sent by the second device after the measurement signal arrives at the target; and the first device performs imaging on the target based on the echo signal. The first device indicates, to the second device, the first spatial location at which the second device is supposed to send the measurement signal, so that a spatial location at which the second device is supposed to send the measurement signal is even, to improve imaging quality. In addition, the second device sends the measurement signal based on the first spatial location indicated by the first device, so that a case in which the second device sends the measurement signal for a plurality of times near a same spatial location can be avoided, to reduce power consumption of the second device.

400

FIG. 4

Processed by Luminess, 75001 PARIS (FR)

EP 4 510 683 A1

## Description

This application claims priority to Chinese Patent Application No. 202210510596.4, filed with the China National Intellectual Property Administration on May 11, 2022 and entitled "ENVIRONMENTAL IMAGING METHOD AND RELATED APPARATUS", which is incorporated herein by reference in its entirety.

## TECHNICAL FIELD

This application relates to the communication field, and in particular, to an environmental imaging method and a related apparatus.

## BACKGROUND

A synthetic aperture radar (synthetic aperture radar, SAR) is a radar with a large "virtual" antenna aperture formed through movement of a single station or combination of a plurality of stations to obtain a high spatial resolution, and can be installed on flight platforms such as aircraft, satellites, and spacecraft. The SAR sends a signal to an object through an antenna, and receives and records an echo signal, to finally form an image. In this imaging manner, a dedicated SAR system needs to be deployed, and a dedicated spectrum needs to be occupied. Consequently, there are disadvantages in terms of costs, coverage, spectral efficiency, compatibility with an existing communication system, and the like.

With development of integrated sensing and communication (integrated sensing and communication, ISAC), use of a radio frequency signal of a communication system to perform environmental sensing, for example, target detection and environmental imaging, has become an increasingly popular research direction. In this manner, a dedicated radar system does not need to be deployed, and a signal of the communication system can be reused. For example, as a terminal device, a vehicle may send an uplink signal during movement, to form a synthetic aperture, and a base station receives an echo signal and performs imaging on an environment through signal processing. However, use of this manner to perform environmental imaging may cause deterioration of imaging quality.

Therefore, a method needs to be urgently provided to improve imaging quality when environmental imaging is performed based on a radio frequency signal of the communication system.

## SUMMARY

This application provides an environmental imaging method and a related apparatus, to improve imaging quality when environmental imaging is performed based on a radio frequency signal of a communication system.

According to a first aspect, this application provides an environmental imaging method. The method may be performed by a first device, may be performed by a component (for example, a chip or a chip system) disposed in the first device, or may be implemented by a logical module or software that can implement all or some functions of the first device. This is not limited in this application.

Optionally, the first device may be a network device or a terminal device.

For example, the method includes: sending first indication information to a second device, where the first indication information indicates a first spatial location at which the second device is supposed to send a measurement signal, and the first spatial location is evenly distributed in an azimuth direction (azimuth direction) or at an azimuth angle (azimuth angle); receiving an echo signal, where the echo signal is a signal formed by reflecting, by a target, the measurement signal sent by the second device after the measurement signal arrives at the target; and performing imaging on the target based on the echo signal.

The first spatial location is a spatial location at which the first device indicates the second device to send the measurement signal. In other words, the first device expects the second device to send the measurement signal when the second device arrives at the first spatial location. In addition, in this application, the spatial location may be understood as a location in the azimuth direction and/or at the azimuth angle.

Based on the foregoing technical solution, the first spatial location that is indicated by the first device to the second device and at which the second device is supposed to send the measurement signal is evenly distributed in the azimuth direction and/or at the azimuth angle. In other words, an interval between spatial locations at which the second device is supposed to send the measurement signal at two adjacent times is the same in the azimuth direction and/or at the azimuth angle. The second device may send the measurement signal based on the first spatial location, so that the first device performs imaging on the target based on the echo signal of the measurement signal. The first device indicates, to the second device, the first spatial location at which the measurement signal is supposed to be sent, so that a spatial location at which the second device is supposed to send the measurement signal is even, to improve imaging quality. Moreover, the second device sends the measurement signal based on the first spatial location indicated by the first device, so that a case in which the second device sends the measurement signal for a plurality of times near a same spatial location can be avoided, to reduce power consumption of the second device. In addition, this can avoid a case in which the second device occupies excessive air interface resources when sending the measurement signal for the plurality of times near the same spatial location. Further, a case in which the first device receives an echo signal of the measurement signal that is supposed to be sent for a plurality of times near the same spatial location can be avoided. This can reduce signal storage redundancy and signal processing complexity.

With reference to the first aspect, in some possible implementations of the first aspect, the method further includes: sending second indication information to the second device, where the second indication information indicates an imaging mode, and the imaging mode includes a strip mode or a spotlight mode.

The second indication information and the first indication information may be sent by using same signaling, or may be carried in different signaling for sending. When the second indication information and the first indication information are carried in different signaling for sending, a sequence of sending the first indication information and the second indication information is not limited in this application.

It may be understood that, in the strip mode, locations that are indicated by the first device to the second device and at which the measurement signal is supposed to be sent are distributed at equal intervals in the azimuth direction. In the spotlight mode, locations that are indicated by the first device to the second device and at which the measurement signal is supposed to be sent are distributed at equal intervals at the azimuth angle, and the first device indicates the imaging mode to the second device, so that the second device sends the measurement signal at a corresponding location based on the imaging mode indicated by the first device, and reports a state in which the measurement signal is supposed to be sent. For example, if the imaging mode indicated by the first device is the strip mode, the second device sends the measurement signal at a corresponding location in the azimuth direction, and the reported state in which the measurement signal is supposed to be sent is associated with the azimuth direction. For example, a reported location at which the measurement signal is supposed to be sent is the location in the azimuth direction.

In addition, the first device may indicate the first spatial location to the second device in any one of the following manners.

Manner 1: The first spatial location indicated by the first device to the second device is a location in the azimuth direction. In this way, the second device may determine the location at which the measurement signal is supposed to be sent and that is in the azimuth direction, and may further determine that the imaging mode used by the first device is the strip mode, in other words, the first device implicitly indicates the imaging mode based on the first spatial location. Optionally, the first device may further send an imaging mode indication to the second device. In Manner 1, the imaging mode indicated by the first device to the second device is the strip mode.

Manner 2: The first spatial location indicated by the first device to the second device is a location at the azimuth angle. In this way, the second device may determine the location at which the measurement signal is supposed to be sent and that is at the azimuth angle, and may further determine that the imaging mode used by the first device is the spotlight mode. Optionally, the first device may further send an imaging mode indication to the second device. In Manner 2, the imaging mode indicated by the first device to the second device is the spotlight mode.

Manner 3: The first device indicates both a location in the azimuth direction and a location at the azimuth angle to the second device, and further indicates the imaging mode of the first device to the second device. For example, if the imaging mode indicated by the first device to the second device is the strip mode, the second device may send the measurement signal based on the location in the azimuth direction. For another example, if the imaging mode indicated by the first device to the second device is the spotlight mode, the second device may send the measurement signal based on the location at the azimuth angle.

With reference to the first aspect, in some possible implementations of the first aspect, the method further includes: receiving state information from the second device, where the state information indicates one or more of the following: a second spatial location at which the second device is supposed to send the measurement signal, positioning precision at which the second device is supposed to send the measurement signal, or a moving speed at which the second device is supposed to send the measurement signal.

Different from the first spatial location, the second spatial location is a spatial location that is determined by the second device and at which the second device is supposed to send the measurement signal. It may be understood that the second spatial location determined by the second device may have a specific error with an actual spatial location of the second device due to a problem of positioning precision of the second device. In other words, a range of the actual spatial location of the second device may be determined based on the second spatial location and the positioning precision of the second device.

The first device may receive the state information from the second device, to perform imaging on the target based on the state information and the echo signal. The first device receives the positioning precision at which the second device is supposed to send the measurement signal and/or the moving speed at which the second device is supposed to send the measurement signal. This helps the first device select an appropriate echo signal. This improves imaging quality.

With reference to the first aspect, in some possible implementations of the first aspect, there are a plurality of measurement signals, and before the performing imaging on an environment based on the echo signal, the method further includes: discarding an echo signal of a first measurement signal when positioning precision at which the second device is supposed to send the first measurement signal is greater than a first threshold, and/or when a moving speed at which the second device is supposed to send the first measurement signal is greater than a second threshold, where the first measurement signal is any one of the plurality of measurement signals.

The first device may screen the plurality of measurement signals, and determine a measurement signal whose echo signal is to be used to perform imaging on the target. This improves imaging quality. For example, if positioning precision at which the second device is supposed to send a measurement signal is greater than the first threshold, and/or a moving speed at which the second device is supposed to send a measurement signal is greater than the second threshold, an echo signal of the measurement signal is discarded.

With reference to the first aspect, in some possible implementations of the first aspect, there are a plurality of measurement signals, and before the performing imaging on an environment based on the echo signal, the method further includes: determining a weight value corresponding to each of a plurality of measurement signals, where the weight value is determined based on positioning precision and/or a moving speed at which the second device is supposed to send the plurality of measurement signals.

The first device may determine, based on the positioning precision and/or the moving speed at which the second device is supposed to send the plurality of measurement signals, the weight value corresponding to each of the plurality of measurement signals. This helps improve imaging quality. For example, lower positioning precision and/or a higher moving speed at which the second device is supposed to send the plurality of measurement signals indicate/indicates poorer imaging quality. Therefore, the weight value corresponding to the measurement signal is set to a small value, in other words, an echo signal of the measurement signal has small impact on imaging. This can improve imaging quality.

With reference to the first aspect, in some possible implementations of the first aspect, the first indication information further indicates a positioning capability that the second device needs to meet.

The first device indicates, to the second device, the positioning capability that needs to be met. This helps select an appropriate second device to send the measurement signal. It may be understood that, if the positioning capability of the second device is weak, the second spatial location at which the second device is supposed to send the measurement signal may greatly differ from the first spatial location indicated by the first device, affecting imaging quality. Therefore, the appropriate second device is selected, so that imaging quality can be improved.

With reference to the first aspect, in some possible implementations of the first aspect, the method further includes: receiving feedback information from the second device, where the feedback information indicates whether a positioning capability of the second device meets a requirement.

The second device may indicate whether the positioning capability of the first device meets the requirement, so that the first device determines whether to continue to use the second device to perform imaging.

According to a second aspect, this application provides an environmental imaging method. The method may be performed by a second device, may be performed by a component (for example, a chip or a chip system) disposed in the second device, or may be implemented by a logical module or software that can implement all or some functions of the second device. This is not limited in this application.

Optionally, the second device may be a network device or a terminal device.

For example, the method includes: receiving first indication information from a first device, where the first indication information indicates a first spatial location at which the second device is supposed to send a measurement signal, and the first spatial location is evenly distributed in an azimuth direction and/or at an azimuth angle; and sending the measurement signal based on the first indication information, where the measurement signal is used to perform imaging on a target.

The first spatial location is a spatial location at which the first device indicates the second device to send the measurement signal. In other words, the first device expects the second device to send the measurement signal when the second device arrives at the first spatial location.

Based on the foregoing technical solution, the second device may send the measurement signal based on the first spatial location indicated by the first device. The first device indicates, to the second device, the first spatial location at which the measurement signal is supposed to be sent, so that a spatial location at which the second device is supposed to send the measurement signal is even, to improve imaging quality. Moreover, the second device sends the measurement signal based on the first spatial location indicated by the first device, so that a case in which the second device sends the measurement signal for a plurality of times near a same spatial location can be avoided, to reduce power consumption of the second device. In addition, this can avoid a case in which the second device occupies excessive air interface resources when sending the measurement signal for the plurality of times near the same spatial location. Further, a case in which the first device receives a plurality of echo signals near a same spatial location can be avoided. This can reduce signal storage redundancy and signal processing complexity.

With reference to the second aspect, in some possible implementations of the second aspect, the method further includes: receiving second indication information from the first device, where the second indication information indicates an imaging mode, and the imaging mode includes a strip mode or a spotlight mode.

The second indication information and the first indication information may be sent by using same signaling, or may be carried in different signaling for sending. When the second indication information and the first indication information are carried in different signaling for sending, a sequence of sending the first indication information and the second indication information is not limited in this application.

It may be understood that, in the strip mode, locations that are indicated by the first device to the second device and at which the measurement signal is supposed to be sent are distributed at equal intervals in the azimuth direction. In the spotlight mode, locations that are indicated by the first device to the second device and at which the measurement signal is supposed to be sent are distributed at equal intervals at the azimuth angle, and the first device indicates the imaging mode to the second device, so that the second device sends the measurement signal at a corresponding location based on the imaging mode indicated by the first device, and reports a state in which the measurement signal is supposed to be sent. For example, if the imaging mode indicated by the first device is the strip mode, the second device sends the measurement signal at a corresponding location in the azimuth direction, and the reported state in which the measurement signal is supposed to be sent is associated with the azimuth direction. For example, a reported location at which the measurement signal is supposed to be sent is the location in the azimuth direction.

With reference to the second aspect, in some possible implementations of the second aspect, the method further includes: sending state information to the first device, where the state information indicates one or more of the following: a second spatial location at which the second device is supposed to send the measurement signal, positioning precision at which the second device is supposed to send the measurement signal, or a moving speed at which the second device is supposed to send the measurement signal.

The second spatial location is a spatial location that is determined by the second device and at which the second device is supposed to send the measurement signal. It may be understood that the second spatial location determined by the second device may have a specific error with an actual spatial location of the second device due to a problem of positioning precision of the second device. In other words, a range of the actual location of the second device may be determined based on the second spatial location and the positioning precision of the second device.

The second device may send the state information to the first device, so that the first device performs imaging on the target based on the state information and an echo signal. The positioning precision at which the second device is supposed to send the measurement signal and/or the moving speed at which the second device is supposed to send the measurement signal help the first device select an appropriate echo signal. This improves imaging quality.

With reference to the second aspect, in some possible implementations of the second aspect, the first indication information further indicates a positioning capability that the second device needs to meet.

The first device indicates, to the second device, the positioning capability that needs to be met. This helps select an appropriate second device to send the measurement signal. It may be understood that, if the positioning capability of the second device is weak, the second spatial location at which the second device is supposed to send the measurement signal may greatly differ from the first spatial location indicated by the first device, affecting imaging quality. Therefore, the appropriate second device is selected, so that imaging quality can be improved.

With reference to the second aspect, in some possible implementations of the second aspect, the method further includes: sending feedback information to the first device, where the feedback information indicates whether a positioning capability of the second device meets a requirement.

The second device may indicate, to the first device, whether the positioning capability of the second device meets the requirement, so that the first device determines whether to continue to use the second device to perform imaging.

With reference to the first aspect and the second aspect, in some possible implementations, the first indication information indicates a sampling area and at least one of a sampling interval and a quantity of sampling points, the sampling area indicates an area in which the measurement signal is supposed to be sent, the quantity of sampling points indicates a quantity of times of sending the measurement signal, and the sampling interval indicates an interval between locations at which the measurement signal is supposed to be sent at two adjacent times.

The first device may indicate the sampling area and the quantity of sampling points, and the second device may determine, based on the sampling area and the quantity of sampling points, spatial locations at which the measurement signal needs to be sent. Alternatively, the first device may indicate the sampling area and the sampling interval, and the second device may determine, based on the sampling area and the sampling interval, spatial locations at which the measurement signal is to be sent. In this way, the second device may evenly send the measurement signal, so that array elements of a synthetic aperture are evenly distributed. This improves imaging quality.

According to a third aspect, this application provides a communication device, to implement the method according to any one of the first aspect or the possible implementations of the first aspect, or implement the method according to any one of the second aspect or the possible implementations of the second aspect. The communication device includes a corresponding unit configured to perform the foregoing method. The unit included in the communication device may be implemented by using software and/or hardware.

According to a fourth aspect, this application provides a communication device. The communication device includes a processor and a memory. The processor may be coupled to the memory, and may be configured to execute a computer program or instructions in the memory, to implement the method according to any one of the first aspect and the possible implementations of the first aspect, or implement the method according to any one of the second aspect and the possible implementations of the second aspect.

According to a fifth aspect, this application provides a computer-readable storage medium. The computer-readable storage medium stores a computer program or instructions. When the computer program or the instructions are executed, the method according to any one of the first aspect and the possible implementations of the first aspect is implemented, or the method according to any one of the second aspect and the possible implementations of the second aspect is implemented.

According to a sixth aspect, this application provides a computer program product. The computer program product includes instructions. When the instructions are run, the method according to any one of the first aspect and the possible implementations of the first aspect is implemented, or the method according to any one of the second aspect and the possible implementations of the second aspect is implemented.

According to a seventh aspect, this application provides a chip system. The chip system includes a processor, may further include a memory, and is configured to implement the method according to any one of the first aspect and the possible implementations of the first aspect, or implement the method according to any one of the second aspect and the possible implementations of the second aspect. The chip system may include a chip, or may include the chip and another discrete component.

It should be understood that the third aspect to the seventh aspect of this application correspond to the technical solutions of the first aspect and the second aspect of this application, and beneficial effects achieved by the aspects and corresponding feasible implementations are similar. Details are not described again.

## BRIEF DESCRIPTION OF DRAWINGS

FIG. 1 is a diagram of performing imaging on a target in a strip mode according to an embodiment of this application;
FIG. 2 is a diagram of performing imaging on a target in a spotlight mode according to an embodiment of this application;
FIG. 3 is a diagram of an application scenario to which a method according to an embodiment of this application is applicable;
FIG. 4 is a schematic flowchart of an environmental imaging method according to an embodiment of this application;
FIG. 5 is a diagram of forms of a first spatial location in different operation modes according to an embodiment of this application;
FIG. 6 is a diagram of an azimuth angle in a spotlight mode according to an embodiment of this application;
FIG. 7 to FIG. 10 are diagrams of imaging quality comparison according to an embodiment of this application; and
FIG. 11 to FIG. 14 are diagrams of structures of possible communication devices according to embodiments of this application.

## DESCRIPTION OF EMBODIMENTS

The following describes technical solutions of this application with reference to the accompanying drawings.

The technical solutions provided in this application may be applied to various communication systems. For example, the technical solutions may be applied to a cellular system related to the 3rd generation partnership project (3rd generation partnership project, 3GPP): a 4th generation (4th generation, 4G) communication system, for example, a long term evolution (long term evolution, LTE) system, a 5th generation (5th generation, 5G) communication system, for example, a new radio (new radio, NR) system, and a communication system that is evolved after 5G, for example, a 6th generation (6th generation, 6G) communication system. The technical solutions may be further applied to a wireless fidelity (wireless fidelity, Wi-Fi) system and a communication system that supports integration of a plurality of wireless technologies. This is not limited in this application.

The following first describes network elements in embodiments of this application: a network device and a terminal device.

In embodiments of this application, the network device may be any device that has a wireless transceiver function, and is configured to communicate with a terminal device or another network device, or may be a device that connects a terminal device to a wireless network. The network device may include various forms of base stations, for example, a macro base station, a micro base station (also referred to as a small cell), a relay station, an access point (access point, AP), a device that implements a base station function in a communication system that is evolved after 5G, an access point in a Wi-Fi system, a transmission reception point (transmission reception point, TRP), a transmission point (transmission point, TP), a mobile switching center, and a device that functions as a base station device-to-device (device-to-device, D2D) communication, vehicle-to-everything (vehicle to everything, V2X) communication, or machine-to-machine (machine-to-machine, M2M) communication, and may further include a central unit (central unit, CU) and a distributed unit (distributed unit, DU) in a cloud access network (cloud radio access network, C-RAN) system, and a network device in a non-terrestrial network (non-terrestrial network, NTN) communication system, in other words, the network device may be deployed on a high-altitude platform or a satellite. A specific form of the network device is not limited in embodiments of this application.

In some deployments, the CU may be responsible for processing a non-real-time protocol and service, and implement functions of a radio resource control (radio resource control, RRC) layer and a packet data convergence protocol (packet data convergence protocol, PDCP) layer. The DU may include a function of a radio link control (radio link control, RLC) layer, a function of a media access control (media access control, MAC) layer, and some functions of a physical (physical, PHY) layer.

The network device provides a service for a cell, and the terminal device uses a transmission resource (for example, a frequency domain resource or a spectrum resource) allocated by the network device to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a highspeed data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device having a wireless connection function. Currently, some examples of terminal devices may be: a mobile phone (mobile phone), a tablet computer (pad), a computer that has a wireless transceiver function (for example, a notebook computer or a palmtop computer), a mobile internet device (mobile internet device, MID), customer-premises equipment (customer-premises equipment, CPE), a smart point of sale (point of sale, POS) machine, a virtual reality (virtual reality, VR) device, an augmented reality (augmented reality, AR) device, a wireless terminal in industrial control (industrial control), a wireless terminal in self-driving (self-driving), an automatic guided vehicle (Automated Guided Vehicle, AGV), and an uncrewed aerial vehicle, communication devices on vehicles and high-altitude aircraft, a wireless terminal in telemedicine (remote medical), a wireless terminal in a smart grid (smart grid), a wireless terminal in transportation safety (transportation safety), a wireless terminal in a smart city (smart city), a wireless terminal (for example, an electronic lock, a smart speaker, or a smart refrigerator) in a smart home (smart home), a terminal device in an internet of things (internet of things, IoT) system, a cellular phone, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device or another processing device connected to a wireless modem, a vehicle-mounted device, a wearable device, or a terminal device in a 5G network or a network that is evolved after 5G.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction.

In addition, the terminal device may alternatively include sensors such as an intelligent printer, a train detector, and a gas station, and main functions include collecting data (which is a function of some terminal devices), receiving control information and downlink data of a network device, sending an electromagnetic wave, and transmitting uplink data to the network device.

It should be understood that specific forms of the network device and the terminal device are not limited in this application. In embodiments of this application, an apparatus configured to implement a function of the terminal device may be a terminal device, or may be an apparatus that can support the terminal device in implementing the function, for example, a chip system. The apparatus may be mounted in a terminal device or used together with the terminal device. In embodiments of this application, the chip system may include a chip, or may include a chip and another discrete component. In embodiments of this application, an apparatus configured to implement a function of the network device may be a network device, or may be an apparatus that can support the network device in implementing the function, for example, a chip system. The apparatus may be mounted in a network device or used together with the network device. In embodiments of this application, the chip system may include a chip, or may include a chip and another discrete component.

To better understand the method provided in embodiments of this application, the following briefly describes terms used in this application.

1. SAR: The SAR is a radar with a large "virtual" antenna aperture formed through movement of a single station or combination of a plurality of stations to obtain a high spatial resolution, and can be installed on flight platforms such as aircraft, satellites, and spacecraft. The large antenna aperture formed through movement of the single station or combination of the plurality of stations is referred to as a "synthetic aperture". Correspondingly, a real aperture radar (real aperture radar, RAR) is a radar that directly uses a physically existing antenna for detection, and a physically existing antenna aperture is referred to as a "real aperture".

Different from a typical radar that can only measure a distance, a speed, and an angle of a target, the SAR may further perform imaging on the target. Two common working modes of the SAR are a strip mode and a spotlight mode. With reference to the accompanying drawings, the following describes in detail a principle of performing, by the SAR, imaging on a target scenario based on the foregoing two modes.

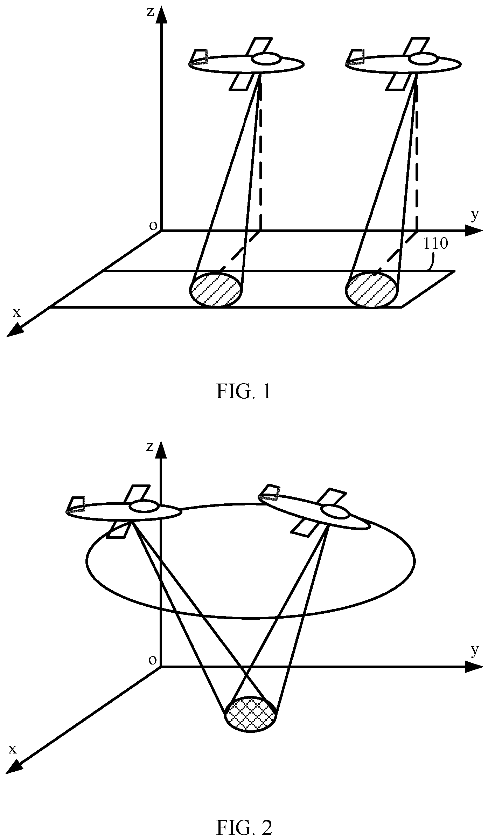

FIG. 1 is a diagram of performing imaging on a target in a strip mode according to an embodiment of this application. As shown in FIG. 1, in the strip mode, an SAR carried on an aircraft moves in a y direction relative to the ground, and periodically sends and receives a signal. A strip area 110 is a target scenario, and an elliptical area covered by a beam is a coverage area of a single time of radiation. A broadband signal, for example, a linear frequency modulated (linear frequency modulated, LFM) signal, sent by the SAR, provides a high resolution in a range direction. In addition, a large synthetic aperture formed by the SAR with movement of the aircraft provides a high resolution in an azimuth direction. In conclusion, in the strip mode, the SAR can perform high-resolution imaging on a target scenario.

FIG. 2 is a diagram of performing imaging on a target in a spotlight mode according to an embodiment of this application. As shown in FIG. 2, in the spotlight mode, an SAR performs circular motion around a target scenario when an aircraft moves around the target scenario, and always makes a beam point to the target scenario, so that high-resolution imaging can be performed on the target scenario.

It may be understood that, to perform imaging on the target scenario based on the SAR, a dedicated SAR system needs to be deployed and a dedicated spectrum needs to be occupied. Consequently, there are disadvantages in terms of costs, coverage, spectral efficiency, compatibility with an existing communication system, and the like.

2. ISAC: The ISAC is a joint design of a same system to support both communication and sensing functions. Compared with a communication system and a sensing system that are separately deployed, the ISAC has advantages in terms of a size, a weight, power consumption, costs, efficiency, and the like.

With further research and development of the ISAC in academia and industry, use of a radio frequency signal of a communication system to perform environmental imaging becomes an increasingly popular research direction. Compared with an original SAR-based environmental imaging, use of the radio frequency signal of the communication system to perform environmental imaging has advantages in terms of costs, coverage, and spectral efficiency.

Before an environmental imaging method provided in embodiments of this application is described, the following descriptions are provided:

1. For ease of clearly describing the technical solutions in embodiments of this application, in embodiments of this application, terms such as "first" and "second" are used to distinguish between same items or similar items that have basically same functions and purposes. For example, first indication information and second indication information are merely used to distinguish between different indication information, and do not limit sequences of the first indication information and the second indication information. A person skilled in the art may understand that the terms such as "first" and "second" do not limit a quantity or an execution sequence, and the terms such as "first" and "second" do not indicate a definite difference.

2. The expression "at least one of the following items (pieces)" or a similar expression means any combination of these items, including a single item (piece) or any combination of a plurality of items (pieces). For example, at least one of a, b, and c may indicate a, or b, or c, or a and b, or a and c, or b and c, or a, b, and c, where a, b, and c may be singular or plural. In this application, "/" represents "or". The term "and/or" describes an association relationship for describing associated objects and represents that three relationships may exist. For example, a and/or b may represent the following three cases: Only a exists, both a and b exist, and only b exists.

With reference to the accompanying drawings, the following describes in detail the environmental imaging method provided in embodiments of this application.

For ease of understanding, the following first describes an application scenario to which the method provided in embodiments of this application is applicable. It may be understood that the application scenario described in embodiments of this application is intended to describe the technical solutions in embodiments of this application more clearly, and does not constitute a limitation on the technical solutions provided in embodiments of this application.

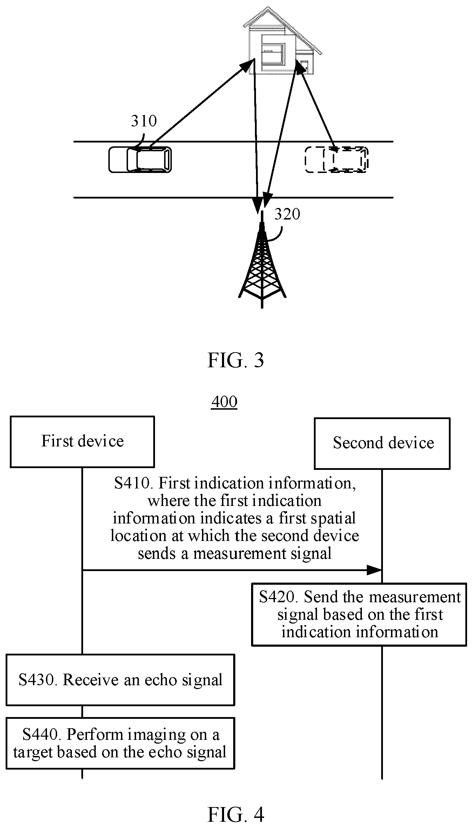

FIG. 3 is a diagram of an application scenario to which a method according to an embodiment of this application is applicable. As shown in FIG. 3, a terminal device 310 (where a car is used as an example in the figure) may send a measurement signal, and a network device 320 may receive an echo signal of the measurement signal, and perform imaging on an environment through signal processing. The echo signal is formed by reflecting the measurement signal by a target. It can be learned from the figure that the terminal device 310 may send a measurement signal during movement, to perform imaging on the target (for example, a house in the figure). The measurement signal sent by the terminal device 310 may be used only for environmental imaging, or may be used for communication with the network device 320. This is not limited in embodiments of this application.

It should be understood that the scenario shown in FIG. 3 may include more or fewer network devices and terminal devices. This is not limited in embodiments of this application.

It should be further understood that communication between the terminal device and the network device is used as an example in the scenario shown in FIG. 3, but this should not constitute any limitation on embodiments of this application. For example, the method provided in this embodiment of this application is further applicable to a scenario in which a terminal device communicates with another terminal device, in other words, a terminal device may send a measurement signal, and the another terminal device may receive an echo signal of the measurement signal, and perform imaging on an environment through signal processing.

It should be noted that the following uses an example in which the network device is used as a receive end of the measurement signal and the terminal device is used as a transmit end of the measurement signal for description.

It can be learned from the scenario shown in FIG. 3 that the terminal device may send the measurement signal at a random location, resulting in poor imaging quality. Specifically, a typical requirement of an imaging algorithm for a synthetic aperture is that array elements of the synthetic aperture are evenly distributed. For a strip mode, "even" means that locations at which the terminal device is supposed to send the measurement signal are evenly distributed at equal intervals in an azimuth direction. For a spotlight mode, "even" means that locations at which the terminal device is supposed to send the measurement signal are evenly distributed at equal intervals at an azimuth angle. Uneven distribution of array elements may result in poor imaging quality. Therefore, when the terminal device sends the measurement signal at a random location, the array elements of the synthetic aperture may be extremely unevenly distributed, and consequently, imaging quality may be poor.

In addition, if the terminal device sends the measurement signal at a random location, an increase in power consumption of the terminal device, a waste of air interface resources, an increase in signal storage redundancy on a network device side, and an increase in signal processing complexity may be caused. For example, the terminal device may send the measurement signal for a plurality of times near a same location. However, for imaging, a plurality of signals near the same location are redundant, and sending of such redundant signals causes an increase in power consumption of the terminal device, a waste of air interface resources, an increase in signal storage redundancy on the network device side, and an increase in signal processing complexity.

To resolve the foregoing problem, this application provides an environmental imaging method. A first device indicates, to a second device, a first spatial location at which the second device is supposed to send the measurement signal. The first spatial location is evenly distributed in an azimuth direction or at an azimuth angle, so that a spatial location at which the second device is supposed to send the measurement signal is even, and a case in which the second device sends the measurement signal for a plurality of times near a same spatial location can be avoided. Further, the second device may send the measurement signal based on the first spatial location, so that the first device performs imaging on a target based on an echo signal of the measurement signal.

It should be noted that the first device is a receive end of the measurement signal, the first device may be a network device or a terminal device, the second device is a transmit end of the measurement signal, and the second device may be a network device or a terminal device.

With reference to the accompanying drawings, the following describes in detail the environmental imaging method provided in embodiments of this application. It should be understood that the method is described in the following embodiments from a perspective of interaction between the first device and the second device. The first device may be, for example, the network device 320 shown in FIG. 3, and the second device may be, for example, the terminal device 310 shown in FIG. 3.

It should be understood that, although the following embodiments are described based on interaction between the first device and the second device as an example, no limitation should be imposed on an execution body of the method. The method provided in embodiments of this application can be performed, provided that a computer program that records the method provided in embodiments of this application can be run. For example, the first device may be replaced with a component (for example, a chip or a chip system) disposed in the first device, or another functional module that can invoke a program and execute the program. The second device may be replaced with a component (for example, a chip or a chip system) disposed in the second device, or another functional module that can invoke a program and execute the program. This is not limited in embodiments of this application.

FIG. 4 is a flowchart of an environmental imaging method 400 according to an embodiment of this application. The method 400 shown in FIG. 4 may include S410 to S440. The following describes in detail the steps in the method 400.

S410. A first device sends first indication information to a second device, where the first indication information indicates a first spatial location at which the second device is supposed to send a measurement signal. Correspondingly, the second device receives the first indication information from the first device.

The first spatial location is evenly distributed in an azimuth direction and/or at an azimuth angle. The first spatial location may be understood as a spatial location at which the first device indicates the second device to send the measurement signal. In other words, the first device expects the second device to send the measurement signal when the second device arrives at the first spatial location. The spatial location may be understood as a location in the azimuth direction and/or at the azimuth angle.

For example, the first device sends the first indication information to the second device, to indicate the first spatial location at which the second device is supposed to send the measurement signal, so that the second device sends the measurement signal based on the first indication information.

Optionally, the first indication information further indicates a sampling area and at least one of a sampling interval and a quantity of sampling points, the sampling area indicates an area in which the measurement signal is supposed to be sent, the quantity of sampling points indicates a quantity of times of sending the measurement signal, and the sampling interval indicates an interval between locations at which the measurement signal is supposed to be sent at two adjacent times.

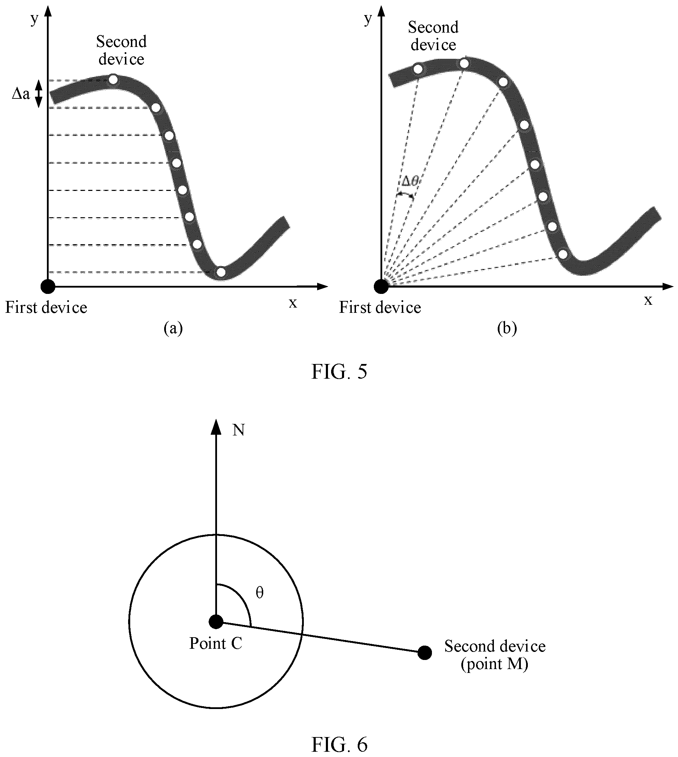

It should be noted that, in different working modes (such as a strip mode and a spotlight mode), forms of the first spatial location indicated in the first indication information sent by the first device to the second device are different. As shown in (a) in FIG. 5, in the strip mode, a form of the first spatial location indicated by the first device to the second device is even distribution in the azimuth direction (for example, a direction y in the figure), in other words, the interval (for example, an interval $\Delta a$ shown in the figure) between the locations at which the second device is supposed to send the measurement signal at the two adjacent times is unchanged in the azimuth direction (for example, the direction y in the figure). As shown in (b) in FIG. 5, in the spotlight mode, a form of the first spatial location indicated by the first device to the second device is even distribution at the azimuth angle, in other words, the interval (for example, an interval $\Delta\theta$ shown in the figure) between the locations at which the second device is supposed to send the measurement signal at the two adjacent times is unchanged at the azimuth angle.

In a possible implementation, the first device may further send second indication information to the second device, where the second indication information indicates an imaging mode, and the imaging mode includes the strip mode or the spotlight mode. Correspondingly, the second device receives the second indication information from the first device.

The second indication information and the first indication information may be sent by using same signaling, or may be carried in different signaling for sending. When the second indication information and the first indication information are carried in different signaling for sending, a sequence of sending the first indication information and the second indication information is not limited in this application.

In another possible implementation, the first device may implicitly indicate an imaging mode based on the first indication information. For example, if the first indication information sent by the first device to the second device includes only distribution of the first spatial location in the azimuth direction, the second device may consider that the imaging mode used by the first device is the strip mode. For another example, if the first indication information sent by the first device to the second device includes only distribution of the first spatial location at the azimuth angle, the second device may consider that the imaging mode used by the first device is the spotlight mode.

In conclusion, the first device may indicate the first spatial location to the second device in any one of the following manners.

Manner 1: The first spatial location indicated by the first device to the second device is only a location in the azimuth direction. In this way, the second device may determine a location at which the measurement signal is supposed to be sent and that is in the azimuth direction, and may further determine that the imaging mode used by the first device is the strip mode. Optionally, in addition to indicating the location in the azimuth direction to the second device, the first device may further indicate the imaging mode to the second device. In Manner 1, the imaging mode indicated by the first device to the second device is the strip mode.

Manner 2: The first spatial location indicated by the first device to the second device is only a location at the azimuth angle. In this way, the second device may determine the location at which the measurement signal is supposed to be sent and that is at the azimuth angle, and may further determine that the imaging mode used by the first device is the spotlight mode. Optionally, in addition to indicating the location at the azimuth angle to the second device, the first device may further indicate the imaging mode to the second device. In Manner 2, the imaging mode indicated by the first device to the second device is the spotlight mode.

Manner 3: The first device indicates both a location in the azimuth direction and a location at the azimuth angle to the second device, and further indicates the imaging mode of the first device to the second device. For example, if the imaging mode indicated by the first device to the second device is the strip mode, the second device may send the measurement signal based on the location in the azimuth direction. For another example, if the imaging mode indicated by the first device to the second device is the spotlight mode, the second device may send the measurement signal based on the location at the azimuth angle.

It should be understood that, before the first device indicates the first spatial location to the second device, the first device may indicate a reference point and/or a coordinate axis to the second device, or the first device and the second device pre-negotiate a reference point and/or a coordinate axis. After the first device and the second device determine the reference point and/or the coordinate axis, the first device indicates the first spatial location to the second device based on the reference point and/or the coordinate axis. In a possible implementation, in the strip mode, the first device may indicate the reference point and the coordinate axis to the second device, or the first device and the second device negotiate the reference point and the coordinate axis. In a possible implementation, in the spotlight mode, the first device may indicate the reference point to the second device, or the first device and the second device negotiate the reference point.

For example, in the spotlight mode, the reference point may be selected as a central point of an imaging area, and may be represented by 2D or 3D coordinates. An included angle between a connection line between the reference point and the second device and a predefined "front side" (that is, an azimuth angle of 0 degrees) in a clockwise direction defines an azimuth angle of the second device. After the first device and the second device determine the reference point, the first device may indicate the first spatial locations to the second device based on the reference point. The locations are evenly distributed at the azimuth angle. For example, the first device indicates, to the second device, a plurality of azimuth angles based on the reference point. After arriving at a corresponding azimuth angle, the second device sends the measurement signal. Optionally, the azimuth angle of 0 degrees may be pre-agreed on as a geographic direction (for example, east, north, or 30 degrees east of north). As shown in FIG. 6, a circular area is an imaging area, a central point (a point C) of the circular area is a reference point, the second device is denoted as a point M, a "front side" (that is, an azimuth angle of 0 degrees) is north, a connection line between the reference point and the second device is denoted as a CM, an included angle between the CM and the predefined "front side" (north) is $\theta$, and $\theta$ is an azimuth angle of the second device. Optionally, a location other than the central point of the imaging area may alternatively be selected as the reference point, and the first device may alternatively indicate the azimuth angle to the second device in another manner. This is not limited in this application.

For example, in the strip mode, a coordinate axis may be identified based on a geographic direction. For example, east indicates a positive direction of an x-axis, and north indicates a positive direction of a y-axis. In addition, a central point of an imaging area may be used as a reference point. After the first device and the second device negotiate the reference point and the coordinate axis, the first device may indicate the first spatial location to the second device, and the location is evenly distributed in the azimuth direction (for example, the y-axis).

For example, the first device may directly indicate coordinates of a plurality of locations (that is, a plurality of sampling points) in the azimuth direction (for example, the y-axis), for example, 10, 20, 30, ..., and 100. The first device may further indicate the sampling area, the sampling interval, and the like. The following describes in detail, with reference to a table, the first spatial location indicated by the first device. Optionally, a location other than the central point of the imaging area may alternatively be selected as the reference point, and the first device may further indicate a location in the azimuth direction to the second device in another manner. This is not limited in this application.

The following separately describes specific content indicated by the first indication information in the strip mode and the spotlight mode, in other words, how the first device indicates a sampling location to the second device. It should be understood that the first spatial location indicated by the first indication information in the following descriptions is a location relative to an agreed reference point in the azimuth direction and/or at the azimuth angle.

First, in the strip mode, the first indication information may indicate a sampling separation in the azimuth direction and a sampling region in the azimuth direction, indicate the quantity of sampling points and a sampling region in the azimuth direction, or indicate an sampling separation in the azimuth direction, a sampling region in the azimuth direction, and the quantity of sampling points, in other words, the first spatial location is represented by using the sampling interval and the sampling region in the azimuth direction, is represented by using the quantity of sampling points and the sampling region in the azimuth direction, or is represented by using the sampling separation in the azimuth direction, the sampling region in the azimuth direction, and the quantity of sampling points.

In a possible design, the first indication information indicates the sampling separation in the azimuth direction and the sampling region in the azimuth direction. The sampling separation in the azimuth direction indicates an interval in the azimuth direction between locations at which the measurement signal is supposed to be sent at two adjacent times, for example, $\Delta a$ shown in (a) in FIG. 5. The sampling region in the azimuth direction may be specified by a start location and an end location at which the measurement signal is supposed to be sent, may be specified by a start location and a length range, or may be specified by an end location and a length range.

In an example, as shown in Table 1, the sampling separation in the azimuth direction indicated by the first indication information is $\Delta a$, for example, 0.1 meter (m), and the sampling region in the azimuth direction is $\{a_{start}, a_{end}\}$, where $a_{start}$ represents the start location at which the measurement signal is supposed to be sent, and $a_{end}$ represents the end location at which the measurement signal is supposed to be sent. For example, the sampling region in the azimuth direction is $\{10, 100\}$. A unit of the sampling separation in the azimuth direction and the sampling region in the azimuth direction may be the same as a unit of positioning precision of the second device. In this embodiment of this application, an example in which the sampling separation in the azimuth direction and the sampling region in the azimuth direction are in a unit of meter is used, but this should not constitute any limitation on embodiments of this application.

In addition, the start location and the end location of the sampling region in the azimuth direction may alternatively be indicated based on geographical coordinates such as longitude and latitude. In this case, the second device needs to convert the geographical coordinates of the longitude and latitude into a location in the azimuth direction based on the received geographical coordinates of the longitude and latitude and a reference point agreed on by the two parties, and send the measurement signal at a corresponding location in the azimuth direction.

**Table 1**

| Parameter | Content |
| --- | --- |
| Sampling separation in the azimuth direction | $\Delta a$ |
| Sampling region in the azimuth direction | $\{a_{start}, a_{end}\}$ |

In another example, as shown in Table 2, the sampling separation in the azimuth direction indicated by the first indication information is $\Delta a$, for example, 0.1 m, and the sampling region in the azimuth direction is $\{a_{start}, a_{range}\}$, where $a_{start}$ represents a start location at which the measurement signal is supposed to be sent, and $a_{range}$ represents a length range in which the measurement signal is supposed to be sent. For example, the sampling region in the azimuth direction is $\{10, 90\}$.

**Table 2**

| Parameter | Content |
| --- | --- |
| Sampling separation in the azimuth direction | $\Delta a$ |
| Sampling region in the azimuth direction | $\{a_{start}, a_{range}\}$ |

In another possible design, the first indication information indicates the quantity of sampling points and the sampling region in the azimuth direction. The sampling region in the azimuth direction may be specified by a start location and an end location at which the measurement signal is supposed to be sent, may be specified by a start location and a length range, or may be specified by an end location and a length range. It may be understood that, the second device may determine, based on the quantity of sampling points and the sampling region in the azimuth direction, the sampling separation in the azimuth direction (for example, a length range of the sampling region in the azimuth direction divided by the quantity of sampling points), and then determine a specific first spatial location at which the measurement signal is supposed to be sent, that is, a first spatial location at which the measurement signal needs to be sent.

In an example, as shown in Table 3, the quantity of sampling points indicated by the first indication information is n, for example, 900, and the sampling region in the azimuth direction is $\{a_{start}, a_{end}\}$, where $a_{start}$ represents the start location at which the measurement signal is supposed to be sent, and $a_{end}$ represents the end location at which the measurement signal is supposed to be sent. For example, the sampling region in the azimuth direction is $\{10\ m, 100\ m\}$.

**Table 3**

| Parameter | Content |
| --- | --- |
| Quantity of sampling points | n |
| Sampling region in the azimuth direction | $\{a_{start}, a_{end}\}$ |

In another possible design, the first indication information indicates the quantity of sampling points, the sampling region in the azimuth direction, and the sampling separation in the azimuth direction. The sampling region in the azimuth direction may be specified by a start location and an end location at which the measurement signal is supposed to be sent, may be specified by a start location and a length range, may be specified by an end location and a length range, may be specified by a start location at which the measurement signal is supposed to be sent, or may be specified by an end location at which the measurement signal is supposed to be sent.

When the sampling region in the azimuth direction is specified only by the start location or the end location, it may be understood that the second device may obtain the length range of azimuth direction sampling based on the quantity of sampling points and the sampling separation in the azimuth direction (for example, (the quantity of sampling points - 1) multiplied by the sampling separation in the azimuth direction).

For example, as shown in Table 4, the quantity of sampling points indicated by the first indication information is n, for example, 900, and the sampling region in the azimuth direction is $a_{start}$, where $a_{start}$ indicates the start location at which the measurement signal is supposed to be sent, and is, for example, 10 m, and the sampling separation in the azimuth direction is $\Delta a$, for example, 0.1 m.

**Table 4**

| Parameter | Content |
|---|---|
| Quantity of sampling points | n |
| Sampling region in the azimuth direction | $a_{start}$ |
| Sampling separation in the azimuth direction | $\Delta a$ |

Second, in the spotlight mode, the first indication information may indicate an azimuth angle sampling interval and an azimuth angle sampling area, indicate the quantity of sampling points and an azimuth angle sampling area, or indicate an azimuth angle sampling interval, an azimuth angle sampling area, and the quantity of sampling points, in other words, the first spatial location is represented by using the sampling interval and the azimuth angle sampling area, is represented by using the quantity of sampling points and the azimuth angle sampling area, or is represented by using the azimuth angle sampling interval, the azimuth angle sampling area, and the quantity of sampling points.

In a possible design, the first indication information indicates the azimuth angle sampling interval and the azimuth angle sampling area. The azimuth angle sampling interval indicates an interval at the azimuth angle between locations at which the measurement signal is supposed to be sent at two adjacent times, for example, $\Delta\theta$ shown in (b) in FIG. 5. The azimuth angle sampling area may be specified by a start location and an end location at which the measurement signal is supposed to be sent, may be specified by a start location and an angle range, or may be specified by an end location and an angle range.

In an example, as shown in Table 5, the azimuth angle sampling interval indicated by the first indication information is $\Delta\theta$ in a unit of degree (°), for example, 0.5°, and the azimuth angle sampling area is $\{\theta_{start}, \theta_{end}\}$, where $\theta_{start}$ indicates the start location at which the measurement signal is supposed to be sent, and $\theta_{end}$ represents the end location at which the measurement signal is supposed to be sent. For example, the azimuth angle sampling area is {10°, 100°}.

**Table 5**

| Parameter | Content |
|---|---|
| Azimuth angle sampling interval (°) | $\Delta\theta$ |
| Azimuth angle sampling area (°) | $\{\theta_{start}, \theta_{end}\}$ |

In another example, as shown in Table 6, the azimuth angle sampling interval indicated by the first indication information is $\Delta\theta$, for example, 0.5°, and the azimuth angle sampling area is $\{\theta_{start}, \theta_{range}\}$, where $\theta_{start}$ indicates the start location at which the measurement signal is supposed to be sent. $\theta_{range}$ indicates the angle range in which the measurement signal is supposed to be sent. For example, the azimuth angle sampling area is {10°, 90°}.

**Table 6**

| Parameter | Content |
|---|---|
| Azimuth angle sampling interval (°) | $\Delta\theta$ |
| Azimuth angle sampling area (°) | $\{\theta_{start}, \theta_{range}\}$ |

In another possible design, the first indication information indicates the quantity of sampling points and the azimuth angle sampling area. The azimuth angle sampling area may be specified by a start location and an end location at which the measurement signal is supposed to be sent, may be specified by a start location and an angle range, or may be specified by an end location and an angle range.

It may be understood that the second device may determine, based on the quantity of sampling points and the azimuth angle sampling area, the azimuth angle sampling interval (for example, an angle range of the azimuth angle sampling area divided by the quantity of sampling points), and then determine a specific first spatial location at which the measurement signal is supposed to be sent, that is, a first spatial location at which the measurement signal needs to be sent.

For example, as shown in Table 7, the quantity of sampling points indicated by the first indication information is n, for example, 180, and the azimuth angle sampling area is $\{\theta_{start}, \theta_{end}\}$, where $\theta_{start}$ indicates the start location at which the measurement signal is supposed to be sent, and $\theta_{end}$ indicates the end location at which the measurement signal is supposed to be sent. For example, the azimuth angle sampling area is $\{10°, 100°\}$.

**Table 7**

| Parameter | Content |
|---|---|
| Quantity of sampling points | n |
| Azimuth angle sampling area (°) | $\{\theta_{start}, \theta_{end}\}$ |

In another possible design, the first indication information indicates the quantity of sampling points, the azimuth angle sampling area, and the azimuth angle sampling interval. The azimuth angle sampling area may be specified by a start location and an end location at which the measurement signal is supposed to be sent, may be specified by a start location and an angle range, may be specified by an end location and an angle range, may be specified by a start location at which the measurement signal is supposed to be sent, or may be specified by an end location at which the measurement signal is supposed to be sent.

When the azimuth angle sampling area is specified only by the start location or the end location, it may be understood that the second device may obtain the angle range of azimuth angle sampling based on the quantity of sampling points and the azimuth angle sampling interval (for example, (the quantity of sampling points - 1) multiplied by the azimuth angle sampling interval).

For example, as shown in Table 8, the quantity of sampling points indicated by the first indication information is n, for example, 180, and the azimuth angle sampling area is $\theta_{start}$, where $\theta_{start}$ indicates the start location at which the measurement signal is supposed to be sent, and is, for example, 10°, and the azimuth angle sampling interval is $\theta$, for example, 0.5°.

**Table 8**

| Parameter | Content |
|---|---|
| Quantity of sampling points | n |
| Azimuth angle sampling area (°) | $\theta_{start}$ |
| Azimuth angle sampling interval (°) | $\Delta\theta$ |

It should be noted that, in this embodiment of this application, the first indication information received by the second device may be from the first device. In other words, the first device configures the first spatial location for the second device, receives an echo signal from the second device, and performs imaging on a target. In addition, the first indication information received by the second device may alternatively be from a third device, in other words, the third device configures the first spatial location for the second device, and the first device receives an echo signal formed by a target through reflection, and performs imaging on the target. In other words, a device that configures the first spatial location for the second device and a device that performs imaging on the target may be a same device, or may be different devices. This is not limited in embodiments of this application.

Optionally, the first indication information may further indicate an allowed error. For example, the first indication information indicates the second device to send the measurement signal at an interval of 10 m at a location in the azimuth direction within 10 m to 100 m, and the allowed error is 0.1 m. In this case, the second device may send the measurement signal within ranges of 9.9 m to 10.1 m, 19.9 m to 20.1 m, 29.9 m to 30.1 m, 39.9 m to 40.1 m, 49.9 m to 50.1 m, 59.9 m to 60.1 m, 69.9 m to 70.1 m, 79.9 m to 80.1 m, 89.9 m to 90.1 m, and 99.9 m to 100.1 m.

Optionally, the first indication information further indicates a positioning capability that the second device needs to meet.

The positioning capability may be represented by using an average value of positioning precision on which statistics is collected in a period of time, or may be represented by using a maximum value of positioning precision on which statistics is collected in a period of time. This is not limited in embodiments of this application.

In a possible implementation, the first device indicates, based on the first indication information, the positioning capability that the second device needs to meet. Correspondingly, after receiving the first indication information, the second device determines whether the second device meets the requirement. It may be understood that, if the positioning capability of the second device is weak, a spatial location at which the second device is supposed to send the measurement signal may greatly differ from the first spatial location indicated by the first device, affecting imaging quality.

Optionally, after determining whether the positioning capability of the second device meets the requirement, the second device may send feedback information to the first device. The feedback information indicates whether a positioning capability of the second device meets the requirement.

In a possible case, the feedback information indicates that the positioning capability of the second device meets the requirement. In this case, the first device may further perform imaging on the target based on the measurement signal sent by the second device. In another possible case, the feedback information indicates that the positioning capability of the second device does not meet the requirement. In this case, the first device stops using the measurement signal sent by the second device to perform imaging on the target. For example, the first device may reselect another device to send the measurement signal.

Optionally, the first device may further indicate, to the second device, duration for sending the measurement signal.

For example, the first device may indicate, to the second device, a period of time in which sending of the measurement signal is completed. In this way, if the target dynamically changes, imaging quality of the target can be improved.

Optionally, in this embodiment of this application, the first indication information and the second indication information may be sent by using physical layer signaling, for example, downlink control information (downlink control information, DCI), or be sent by using signaling dedicated to sensing related information, for example, sensing control signaling. The first indication information and the second indication information may alternatively be sent by using higher layer signaling (where, for example, a higher layer is a layer above a physical layer), for example, an RRC message (message), a MAC control element (control element, CE), or newly defined signaling dedicated to sensing related information.

S420. The second device sends the measurement signal based on the first indication information.

After receiving the first indication information from the first device, the second device sends the measurement signal at the corresponding spatial location based on the first spatial location indicated in the first indication information.

For example, the first device indicates the second device to send the measurement signal at an interval of 10 m at a location in the azimuth direction within 10 m to 100 m, and the allowed error is 0.1 m. In this case, the second device may send the measurement signal within ranges of 9.9 m to 10.1 m, 19.9 m to 20.1 m, 29.9 m to 30.1 m, 39.9 m to 40.1 m, 49.9 m to 50.1 m, 59.9 m to 60.1 m, 69.9 m to 70.1 m, 79.9 m to 80.1 m, 89.9 m to 90.1 m, and 99.9 m to 100.1 m.

The second device needs to occupy an air interface resource to send the measurement signal. Therefore, the first device needs to configure a corresponding air interface resource for the second device, so that the second device sends the measurement signal on the air interface resource configured by the first device.

In a possible implementation, after sending the first indication information to the second device, the first device configures the air interface resource for the second device. The air interface resource includes a frequency domain resource and a time domain resource. Optionally, the air interface resource may further include a space domain resource and/or a code domain resource. For a specific manner of configuring the air interface resource, refer to related descriptions of configuring the air interface resource by the network device for the terminal device in a known technology. Details are not described herein again.

In another possible implementation, after arriving at the spatial location indicated by the first device, the second device temporarily requests the air interface resource from the first device. Correspondingly, the first device temporarily configures the air interface resource for the second device.

It may be understood that, the measurement signal and a communication signal may use a time division multiplexing or frequency division multiplexing manner, or the communication signal and the measurement signal may be a same signal. When the measurement signal and the communication signal may use the time division multiplexing or frequency division multiplexing manner, the first device needs to determine a signal used for imaging and a signal used for communication. In a possible implementation, the second device indicates, to the first device, the measurement signal used for imaging. For example, the second device may report, to the first device, a time domain resource and a frequency domain resource that are occupied by the measurement signal.

S430. The first device receives the echo signal.

The echo signal is a signal formed by reflecting, by the target, the measurement signal sent by the second device after the measurement signal arrives at the target. After the second device sends the measurement signal, the first device receives, on the corresponding air interface resource, the echo signal formed through reflection by the target, and stores the echo signal.

Optionally, the first device receives state information from the second device, where the state information indicates one or more of the following: a second spatial location at which the second device is supposed to send the measurement signal, positioning precision at which the second device is supposed to send the measurement signal, or a moving speed at which the second device is supposed to send the measurement signal.

The second spatial location is a spatial location that is determined by the second device and at which the second device is supposed to send the measurement signal. It may be understood that the second spatial location determined by the second device may have a specific error with an actual spatial location of the second device due to a problem of positioning precision of the second device. In other words, a range of the actual location of the second device may be determined based on the second spatial location and the positioning precision of the second device.

It should be noted that the positioning precision at which the second device is supposed to send the measurement signal depends on a positioning capability of a positioning apparatus (for example, a global positioning system (global positioning system, GPS) or a cellular positioning apparatus) equipped in the second device and a current channel environment of the positioning apparatus (when the second device sends the measurement signal). In a possible implementation, the positioning capability of the positioning apparatus is defined as a statistical value of positioning precision in a signal-to-noise ratio (signal-to-noise ratio, SNR) of a reference positioning signal and a reference channel model. The statistical value may be obtained through pre-simulation or actual measurement. For example, the statistical value may be an average value or a threshold corresponding to a cumulative probability. The channel model may be, for example, an additive white Gaussian noise (additive white Gaussian noise, AWGN) channel model or a 3rd generation partnership project (3rd generation partnership project, 3GPP) standard channel model. The channel model of the positioning apparatus may be determined in advance based on a scenario, but it is difficult to estimate a channel environment of the positioning apparatus in real time. Therefore, in a possible implementation, the positioning capability of the positioning apparatus is used as a reference value for the positioning precision of the second device, and a product of the reference value and a square root of a ratio of an SNR of a specific positioning signal to an SNR of a current positioning signal is used as the positioning precision of the second device. For example, the positioning precision of the second device is $\alpha\sqrt{SNR1/SNR2}$, where $\alpha$ is the reference value of positioning precision of the second device, $SNR1$ is the SNR of the specific positioning signal, and $SNR2$ is the SNR of the current positioning signal.

In a possible implementation, in a process of sending the measurement signal, the second device may synchronously report the state information of the second device to the first device, including one or more of the second spatial location at which the second device is supposed to send the measurement signal, the positioning precision at which the second device is supposed to send the measurement signal, or the moving speed at which the second device is supposed to send the measurement signal.

In another possible implementation, after sending all measurement signals, the second device may uniformly report, to the first device, corresponding state information of the second device obtained when all the measurement signals are supposed to be sent, including one or more of a second spatial location at which the second device is supposed to send the measurement signal, positioning precision at which the second device is supposed to send the measurement signal, or a moving speed at which the second device is supposed to send the measurement signal.

It should be noted that, in the foregoing state information, the positioning precision at which the second device is supposed to send the measurement signal and the moving speed at which the second device is supposed to send the measurement signal affect imaging quality. For example, lower positioning precision at which the second device is supposed to send the measurement signal indicates poorer imaging quality. A larger moving speed at which the second device is supposed to send the measurement signal indicates poorer imaging quality. Therefore, reporting the state information can help the first device select an appropriate measurement signal, to improve the imaging quality.

Optionally, the second device may send the state information by using uplink control information (uplink control information, UCI) or physical uplink shared channel (Physical uplink shared channel, PUSCH) signaling.

S440. The first device performs imaging on the target based on the echo signal.

After receiving the echo signal, the first device performs imaging on the target based on the echo signal.

The first device may perform imaging on the target by using a common SAR imaging algorithm, for example, a back projection (back projection, BP) algorithm, a range Doppler (range Doppler, RD) algorithm, or a range migration (range migration algorithm, RMA). The RD algorithm is generally applicable to a far-field case (a scenario in which a size of an imaging area in the azimuth direction is much larger than a aperture size), and the BP and the RMA are applicable to a near-field case and a far-field case.

In a possible implementation, after receiving the echo signal and the second spatial location at which the second device is supposed to send the measurement signal, the first device uses each second spatial location and a corresponding echo signal as an input, and performs imaging on the target by using any one of the foregoing SAR imaging algorithms.

As described above, positioning precision at which the second device is supposed to send a first measurement signal and a moving speed at which the second device is supposed to send the first measurement signal affect imaging quality. Therefore, before performing imaging on the target, the first device may perform corresponding processing on the echo signal of the measurement signal sent by the second device.

In a possible design, the first device discards the echo signal of the first measurement signal when the positioning precision at which the second device is supposed to send the first measurement signal is greater than a first threshold, and/or when the moving speed at which the second device is supposed to send the first measurement signal is greater than a second threshold, where the first measurement signal is any one of the plurality of measurement signals.

In another possible design, the first device determines a weight value corresponding to each of a plurality of measurement signals, where the weight value is determined based on positioning precision and/or a moving speed at which the second device is supposed to send the plurality of measurement signals. For example, lower positioning precision at which the second device is supposed to send the measurement signal indicates a smaller weight value corresponding to the measurement signal, and a higher moving speed at which the second device is supposed to send the measurement signal indicates a smaller weight value corresponding to the measurement signal.

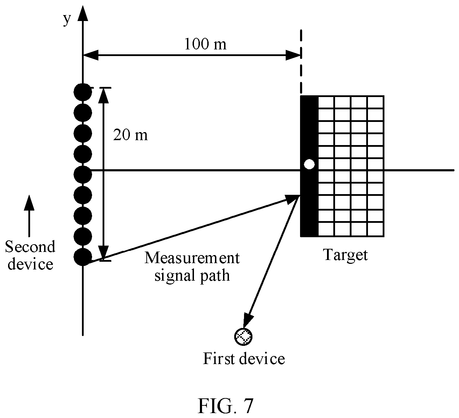

FIG. 7 to FIG. 10 are diagrams of imaging quality comparison according to an embodiment of this application. With reference to FIG. 7 to FIG. 10, the following compares in detail imaging quality when spatial locations at which the second device is supposed to send a measurement signal are even and uneven.

As shown in FIG. 7, it is assumed that the second device moves along a y-axis (an azimuth direction) and continuously sends the measurement signal. A black dot in the figure represents a point at which the second device is supposed to send the measurement signal. The first device receives an echo signal formed by reflecting, by a target, the measurement signal sent by the second device, and performs imaging processing on the echo signal. The following analyzes, by using an example, a relationship between distribution of a spatial location at which the second device is supposed to send the measurement signal and an imaging effect of a one-dimensional area (a black area of the target in the figure) in the azimuth direction. For example, a point spread function (point spread function, PSF) of a middle point (a white dot in the figure) of the one-dimensional area (the black area of the target in the figure) is selected as an analysis basis.

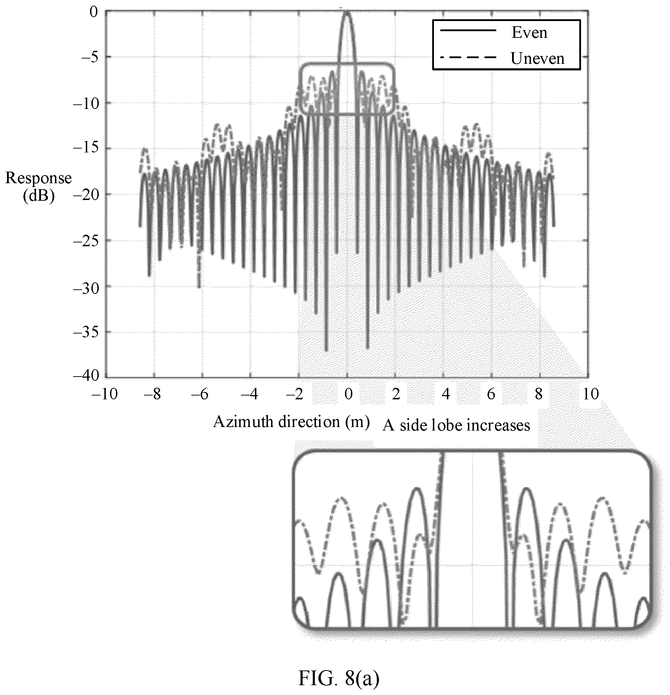

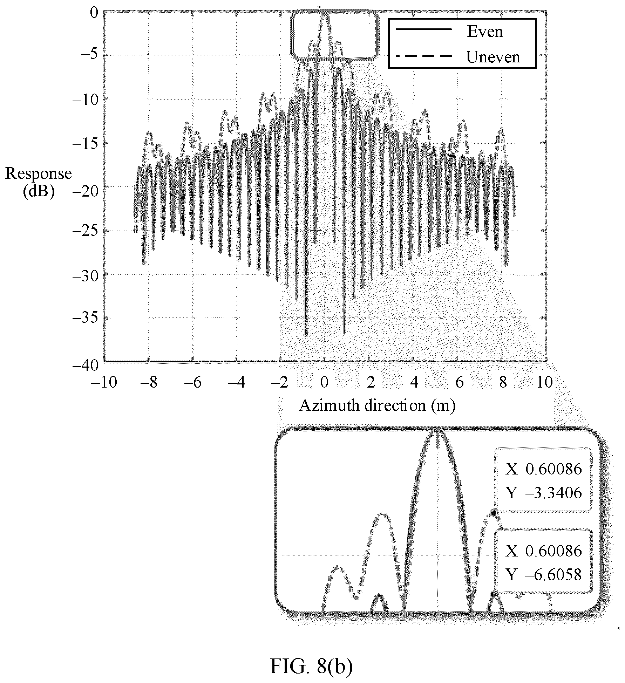

FIG. 8(a) shows an imaging effect achieved when there is a 2.5 m interruption in distribution of a spatial location at which the second device is supposed to send the measurement signal in the azimuth direction, and FIG. 8(b) shows an imaging effect when there is a 5 m interruption in distribution of a spatial location at which the second device is supposed to send the measurement signal in the azimuth direction, where the 2.5 m interruption means that the second device does not send a measurement signal in a 2.5 m interval in the azimuth direction of the measurement signal, in other words, there is an interruption in the spatial locations at which the measurement signal is supposed to be sent. The interruption may be understood as an extreme "uneven" case. Similarly, the 5 m interruption means that the second device does not send a measurement signal in a 5 m interval in the azimuth direction, in other words, there is an interruption in the spatial locations at which the measurement signal is supposed to be sent.

It can be learned that, the discontinuity of a spatial location at which the second device is supposed to send the measurement signal in the azimuth direction causes a PSF side lobe of the target to increase. Consequently, final imaging quality is reduced.

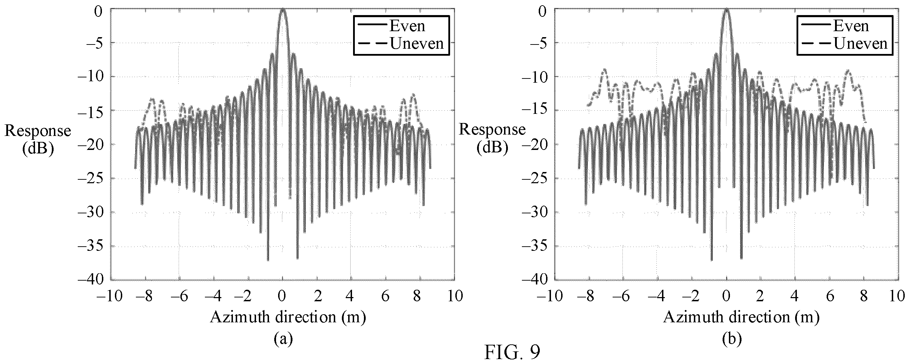

(a) in FIG. 9 shows an imaging effect achieved when spatial locations at which the second device is supposed to send the measurement signal in the azimuth direction are nearly evenly distributed, and (b) in FIG. 9 shows an imaging effect achieved when spatial locations at which the second device is supposed to send the measurement signal in the azimuth direction are not evenly distributed. It can be learned that a PSF side lobe of a target increases because the spatial locations at which the second device is supposed to send the measurement signal in the azimuth direction are unevenly distributed. Consequently, final imaging quality is reduced.

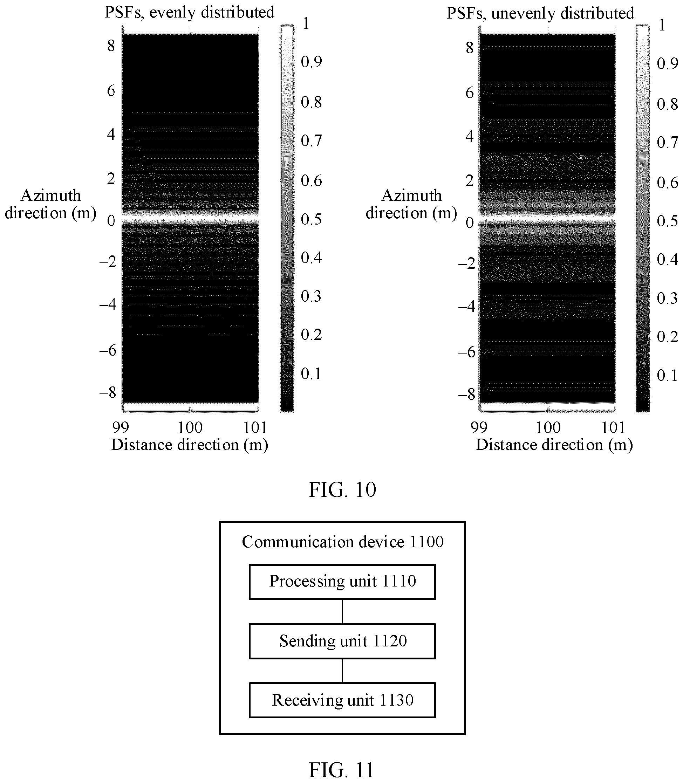

In FIG. 10, PSFs obtained when spatial locations at which a second device is supposed to send the measurement signal are evenly distributed and unevenly distributed in FIG. 9 are displayed in a form of grayscale images. A left side in FIG. 10 is a grayscale image of PSFs obtained when the spatial locations at which the second device is supposed to send the measurement signal are evenly distributed, and a right side in FIG. 10 is a grayscale image of PSFs obtained when spatial locations at which the second device is supposed to send the measurement signal are unevenly distributed. It can be learned that even measurement locations correspond to better imaging quality.

Based on the foregoing technical solution, the first device indicates, to the second device, the first spatial location at which the second device is supposed to send the measurement signal, where the first spatial location is evenly distributed in the azimuth direction or at the azimuth angle. The second device may send the measurement signal based on the first spatial location, so that the first device performs imaging on the target based on the echo signal of the measurement signal. The first device indicates, to the second device, the first spatial location at which the measurement signal is supposed to be sent, so that a spatial location at which the second device is supposed to send the measurement signal is even, to improve imaging quality. Moreover, the second device sends the measurement signal based on the first spatial location indicated by the first device, so that a case in which the second device sends the measurement signal for a plurality of times near a same spatial location can be avoided, to reduce power consumption of the second device. In addition, this can avoid a case in which the second device occupies excessive air interface resources when sending the measurement signal for the plurality of times near the same spatial location. Further, a case in which a first device side receives a plurality of echo signals near a same spatial location can be avoided. This can reduce signal storage redundancy and signal processing complexity.

FIG. 11 to FIG. 14 are diagrams of structures of possible communication devices according to embodiments of this application.

FIG. 11 is a schematic block diagram of a communication device 1100 according to an embodiment of this application.

As shown in FIG. 11, the communication device 1100 includes a processing unit 1110, a sending unit 1120, and a receiving unit 1130.

The communication device 1100 may be configured to implement a function of the second device (for example, the terminal device) in the foregoing method embodiments. Alternatively, the communication device 1100 may include a module configured to implement any function or operation of the second device in the foregoing method embodiments. The module may be completely or partially implemented by using software, hardware, firmware, or any combination thereof. The communication device 1100 is configured to implement a function of the first device (for example, the network device) in the foregoing method embodiments. Alternatively, the communication device 1100 may include a module configured to implement any function or operation of the first device in the foregoing method embodiments. The module may be completely or partially implemented by using software, hardware, firmware, or any combination thereof.

For example, when the communication device 1100 is configured to implement a function of the first device (for example, the network device) in the method embodiment shown in FIG. 4, the sending unit 1120 may be configured to send first indication information to the second device. The first indication information indicates a first spatial location at which the second device is supposed to send a measurement signal, and the first spatial location is evenly distributed in an azimuth direction and/or at an azimuth angle. The receiving unit 1130 may be configured to receive an echo signal. The echo signal is a signal formed by reflecting, by a target, the measurement signal sent by the second device after the measurement signal arrives at the target. The processing unit 1110 may be configured to perform imaging on the target based on the echo signal.

For example, when the communication device 1100 is configured to implement a function of the second device (for example, the terminal device) in the method embodiment shown in FIG. 4, the receiving unit 1130 may be configured to receive first indication information from the first device. The first indication information indicates a first spatial location at which a measurement signal is supposed to be sent, and the first spatial location is evenly distributed in the azimuth direction and/or at the azimuth angle. The sending unit 1120 may be configured to send the measurement signal based on the first indication information. The measurement signal is used to perform imaging on a target.

For more detailed descriptions of the processing unit 1110, the sending unit 1120, and the receiving unit 1130, directly refer to related descriptions in the foregoing method embodiments. Details are not described herein again.

It should be understood that the unit division in embodiments of this application is an example, and is merely logical function division. There may be another division manner during actual implementation. In addition, functional units in embodiments of this application may be integrated into one processor, or each of the units may exist alone physically, or two or more units are integrated into one unit. The integrated unit may be implemented in a form of hardware, or may be implemented in a form of a software functional unit.

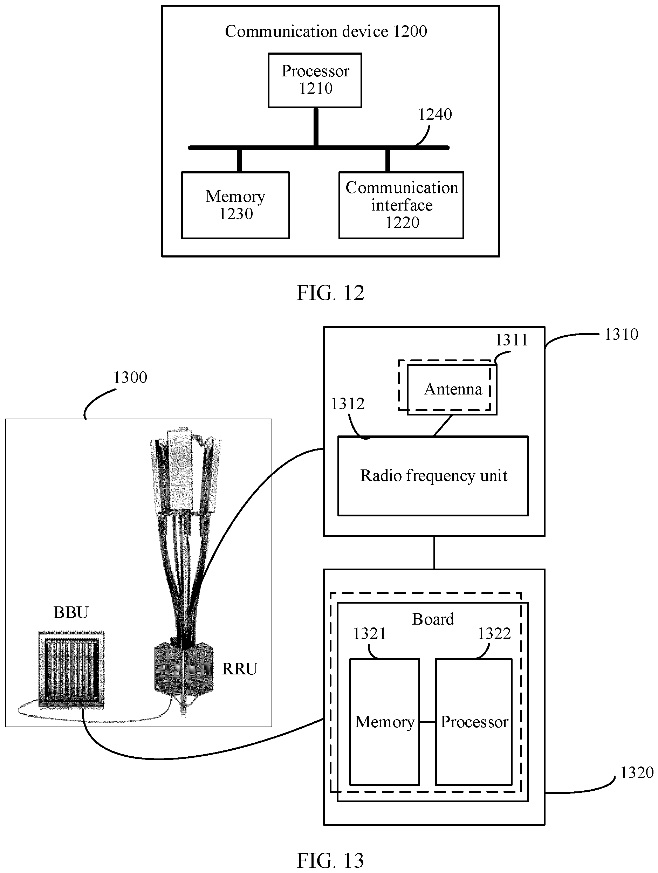

FIG. 12 is another schematic block diagram of a communication device 1200 according to an embodiment of this application. The communication device 1200 may be a chip system, or may be an apparatus in which the chip system is disposed to implement a communication function in the foregoing method embodiments. In this embodiment of this application, the chip system may include a chip, or may include the chip and another discrete component.

As shown in FIG. 12, the communication device 1200 may include a processor 1210 and a communication interface 1220. The communication interface 1220 may be configured to communicate with another device by using a transmission medium, so that the communication device 1200 may communicate with the another device. The communication interface 1220 may be, for example, a transceiver, an interface, a bus, a circuit, or an apparatus that can implement a receiving and sending function. The processor 1210 may input and output data through the communication interface 1220, and is configured to implement the method in the embodiment corresponding to FIG. 4. Specifically, the communication device 1200 may be configured to implement functions of the first device or the second device in the foregoing method embodiments.

When the communication device 1200 is configured to implement the method shown in FIG. 4, the processor 1210 is configured to implement a function of the processing unit 1110, and the communication interface 1220 is configured to implement functions of the sending unit 1120 and the receiving unit 1130.

Optionally, the communication device 1200 further includes at least one memory 1230, configured to store program instructions and/or data. The memory 1230 is coupled to the processor 1210. The coupling in this embodiment of this application may be an indirect coupling or a communication connection between apparatuses, units, or modules in an electrical form, a mechanical form, or another form, and is used for information exchange between the apparatuses, the units, or the modules. The processor 1210 and the memory 1230 may operate cooperatively. The processor 1210 may execute the program instructions stored in the memory 1230. At least one of the at least one memory may be included in the processor.

A specific connection medium between the processor 1210, the communication interface 1220, and the memory 1230 is not limited in embodiments of this application. In this embodiment of this application, in FIG. 12, the processor 1210, the communication interface 1220, and the memory 1230 are connected through a bus 1240. The bus 1240 is represented by a thick line in FIG. 12. A connection manner between other components is merely an example for description, and is not limited thereto. Buses may be classified into an address bus, a data bus, a control bus, and the like. For ease of representation, only one thick line is used to represent the bus in FIG. 12, but this does not mean that there is only one bus or only one type of bus.

FIG. 13 is a diagram of a structure of a network device according to an embodiment of this application, and for example, may be a diagram of a structure of a base station. The base station 1300 may perform a function of the network device (the first device) in the foregoing method embodiments. As shown in FIG. 13, the base station 1300 may include one or more radio frequency units, such as a remote radio unit (remote radio unit, RRU) 1310 and one or more baseband units (baseband units, BBUs) 1320. The RRU 1310 may be referred to as a transceiver unit, and corresponds to the sending unit 1120 and the receiving unit 1130 in FIG. 11. Optionally, the RRU 1310 may also be referred to as a transceiver machine, a transceiver circuit, a transceiver, or the like, and may include at least one antenna 1311 and a radio frequency unit 1312. Optionally, the RRU 1310 may include a receiving unit and a sending unit. The receiving unit may correspond to a receiver (also referred to as a receiver machine or a receiver circuit), and the sending unit may correspond to a transmitter (also referred to as a transmitter machine or a transmitter circuit). The RRU 1310 is mainly configured to receive and send a radio frequency signal and perform conversion between a radio frequency signal and a baseband signal, for example, configured to send configuration information to a terminal device. The BBU 1320 is mainly configured to perform baseband processing, control the base station, and so on. The RRU 1310 and the BBU 1320 may be physically disposed together, or may be physically disposed separately, namely, a distributed base station. In some possible implementations, the RRU 1310 may be replaced with an active antenna unit (active antenna unit, AAU), and the RRU 1310 may implement a function of the RRU 1310 and some functions of the BBU 1320.

The BBU 1320 is a control center of the base station, may also be referred to as a processing unit, may correspond to the processing unit 1110 in FIG. 11, and is mainly configured to complete a baseband processing function, for example, channel coding, multiplexing, modulation, and spectrum spreading. For example, the BBU (the processing unit) may be configured to control the base station to perform an operation procedure related to the network device in the foregoing method embodiments. The BBU 1320 may alternatively be implemented as a CU and a DU.

In an example, the BBU 1320 may include one or more boards. A plurality of boards may jointly support a radio access network (for example, an LTE network) of a single access standard, or may separately support radio access networks (such as LTE, 5G, or other networks) of different access standards. The BBU 1320 further includes a memory 1321 and a processor 1322. The memory 1321 is configured to store instructions and data that are necessary. The processor 1322 is configured to control the base station to perform a necessary action, for example, configured to control the base station to perform the operation procedure related to the network device in the foregoing method embodiments. The memory 1321 and the processor 1322 may serve one or more boards. In other words, a memory and a processor may be disposed on each board. Alternatively, a plurality of boards may share a same memory and a same processor. In addition, a necessary circuit may be further disposed on each board.

It should be understood that the base station 1300 shown in FIG. 13 can implement processes of the network device in the foregoing method embodiments. Operations and/or functions of modules in the base station 1300 are respectively used to implement corresponding procedures in the foregoing method embodiments. For details, refer to the descriptions in the foregoing method embodiments. To avoid repetition, detailed descriptions are appropriately omitted herein.

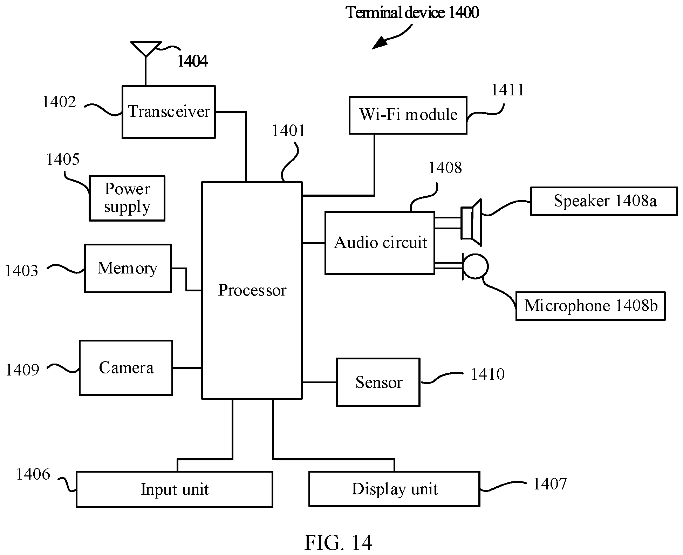

FIG. 14 is a diagram of a structure of a terminal device according to an embodiment of this application. The terminal device 1400 has a function of the terminal device (for example, the second device) in the embodiment shown in FIG. 4. As shown in FIG. 14, the terminal device 1400 includes a processor 1401 and a transceiver 1402. Optionally, the terminal device 1400 further includes a memory 1403. The processor 1401, the transceiver 1402, and the memory 1403 may communicate with each other through an internal connection path to transmit a control signal and/or a data signal. The memory 1403 is configured to store a computer program. The processor 1401 is configured to invoke the computer program from the memory 1403 and run the computer program, to control the transceiver 1402 to receive and send a signal. Optionally, the terminal device 1400 may further include an antenna 1404, configured to send, by using a radio signal, uplink data or uplink control signaling output by the transceiver 1402. Optionally, the terminal device 1400 further includes a Wi-Fi module 1411, configured to access a wireless network.

The processor 1401 and the memory 1403 may be integrated into one processing apparatus. The processor 1401 is configured to execute program code stored in the memory 1403 to implement the foregoing functions. During specific implementations, the memory 1403 may alternatively be integrated into the processor 1401, or independent of the processor 1401. The processor 1401 may correspond to the processing unit 1110 in FIG. 11 or the processor 1210 in FIG. 12.

The transceiver 1402 may correspond to the sending unit 1120 and the receiving unit 1130 in FIG. 11, or correspond to the communication interface 1220 in FIG. 12. The transceiver 1402 may include a receiver (also referred to as a receiver machine or a receiver circuit) and a transmitter (also referred to as a transmitter machine or a transmitter circuit). The receiver is configured to receive a signal, and the transmitter is configured to transmit a signal.

Optionally, the terminal device 1400 may further include a power supply 1405, configured to supply power to various components or circuits in the terminal device 1400.

In addition, to improve a function of the terminal device, the terminal device 1400 may further include one or more of an input unit 1406, a display unit 1407, an audio circuit 1408, a camera 1409, a sensor 1410, and the like. The audio circuit may further include a speaker 1408a, a microphone 1408b, and the like.

It should be understood that the terminal device 1400 shown in FIG. 14 can implement the processes related to the terminal device in the method embodiment shown in FIG. 4. Operations and/or functions of modules in the terminal device 1400 are respectively used to implement corresponding procedures in the foregoing method embodiments. For details, refer to the descriptions in the foregoing method embodiments. To avoid repetition, detailed descriptions are appropriately omitted herein.

This application further provides a computer program product. The computer program product includes a computer program (which may also be referred to as code or instructions). When the computer program is run, a computer is enabled to perform the method in FIG. 4.

This application further provides a computer-readable storage medium. The computer-readable storage medium stores a computer program (which may also be referred to as code or instructions). When the computer program is run, a computer is enabled to perform the method in FIG. 4.

An embodiment of this application provides a communication system. The system includes the first device and the second device described above.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly performed and accomplished by a hardware decoding processor, or may be performed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another appropriate type.

Terms such as "unit" and "module" used in this specification may indicate computer-related entities, hardware, firmware, combinations of hardware and software, software, or software being executed. The units and the modules in embodiments of this application have a same meaning, and may be used in a cross manner.

A person of ordinary skill in the art may be aware that, with reference to various illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between the apparatuses or the units may be implemented in electrical, mechanical, or other forms.

The units described as separate parts may or may not be physically separate, and parts displayed as units may or may not be physical units, in other words, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

In the foregoing embodiments, all or some of the functions of the function units may be implemented by using software, hardware, firmware, or any combination thereof. When the software is used to implement embodiments, all or some of embodiments may be implemented in a form of a computer program product. The computer program product includes one or more computer instructions (programs). When the computer program instructions (programs) are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid state drive (solid state drive, SSD)), or the like.

When functions provided in embodiments of this application are implemented in the form of a software functional unit and sold or used as an independent product, the functions may be stored in a computer-readable storage medium. Based on such an understanding, the technical solutions of this application essentially, or a part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An environmental imaging method, comprising:

   sending, by a first device, first indication information to a second device, wherein the first indication information indicates a first spatial location at which the second device is supposed to send a measurement signal, and the first spatial location is evenly distributed in an azimuth direction and/or at an azimuth angle;
   receiving, by the first device, an echo signal, wherein the echo signal is a signal formed by reflecting, by a target, the measurement signal sent by the second device after the measurement signal arrives at the target; and
   perform, by the first device, imaging on the target based on the echo signal.

2. The method according to claim 1, wherein the method further comprises:
   sending, by the first device, second indication information to the second device, wherein the second indication information indicates an imaging mode, and the imaging mode comprises a strip mode or a spotlight mode.

3. The method according to claim 1 or 2, wherein the method further comprises:
   receiving, by the first device, state information from the second device, wherein the state information indicates one or more of the following: a second spatial location at which the second device is supposed to send the measurement signal, positioning precision at which the second device is supposed to send the measurement signal, or a moving speed at which the second device is supposed to send the measurement signal.

4. The method according to claim 3, wherein there are a plurality of measurement signals, and before the performing, by the first device, imaging on an environment based on the echo signal, the method further comprises:
discarding, by the first device, an echo signal of a first measurement signal when positioning precision at which the second device is supposed to send the first measurement signal is greater than a first threshold, and/or when a moving speed at which the second device is supposed to send the first measurement signal is greater than a second threshold, wherein the first measurement signal is any one of the plurality of measurement signals.

5. The method according to claim 3, wherein there are a plurality of measurement signals, and before the performing, by the first device, imaging on an environment based on the echo signal, the method further comprises:
determining, by the first device, a weight value corresponding to each of the plurality of measurement signals, wherein the weight value is determined based on positioning precision and/or a moving speed at which the second device is supposed to send the plurality of measurement signals.

6. The method according to any one of claims 1 to 5, wherein the first indication information further indicates a positioning capability that the second device needs to meet.

7. The method according to claim 6, wherein the method further comprises:
receiving, by the first device, feedback information from the second device, wherein the feedback information indicates whether a positioning capability of the second device meets a requirement.

8. An environmental imaging method, comprising:

receiving, by a second device, first indication information from a first device, wherein the first indication information indicates a first spatial location at which the second device is supposed to send a measurement signal, and the first spatial location is evenly distributed in an azimuth direction and/or at an azimuth angle; and
sending, by the second device, the measurement signal based on the first indication information, wherein the measurement signal is used to perform imaging on a target.

9. The method according to claim 8, wherein the method further comprises:
receiving, by the second device, second indication information from the first device, wherein the second indication information indicates an imaging mode, and the imaging mode comprises a strip mode or a spotlight mode.

10. The method according to claim 8 or 9, wherein the method further comprises:
sending, by the second device, state information to the first device, wherein the state information indicates one or more of the following: a second spatial location at which the second device is supposed to send the measurement signal, positioning precision at which the second device is supposed to send the measurement signal, or a moving speed at which the second device is supposed to send the measurement signal.

11. The method according to any one of claims 8 to 10, wherein the first indication information further indicates a positioning capability that the second device needs to meet.

12. The method according to claim 11, wherein the method further comprises:
sending, by the second device, feedback information to the first device, wherein the feedback information indicates whether a positioning capability of the second device meets a requirement.

13. The method according to any one of claims 1 to 12, wherein the first indication information indicates a sampling area and at least one of a sampling interval and a quantity of sampling points, the sampling area indicates an area in which the measurement signal is supposed to be sent, the quantity of sampling points indicates a quantity of times of sending the measurement signal, and the sampling interval indicates an interval between locations at which the measurement signal is supposed to be sent at two adjacent times.

14. A communication device, comprising:

a sending unit, configured to send first indication information to a second device, wherein the first indication information indicates a first spatial location at which the second device is supposed to send a measurement signal, and the first spatial location is evenly distributed in an azimuth direction and/or at an azimuth angle;
a receiving unit, configured to receive an echo signal, wherein the echo signal is a signal formed by reflecting, by a target, a measurement signal sent by the second device after the measurement signal arrives at the target; and
a processing unit, configured to perform imaging on the target based on the echo signal.

15. The communication device according to claim 14, wherein the sending unit is further configured to send second indication information to the second device, wherein the second indication information indicates an imaging mode, and the imaging mode comprises a strip mode or a spotlight mode.

16. The communication device according to claim 14 or 15, wherein the receiving unit is further configured to receive state information from the second device, wherein the state information indicates one or more of the following: a second spatial location at which the second device is supposed to send the measurement signal, positioning precision at which the second device is supposed to send the measurement signal, or a moving speed at which the second device is supposed to send the measurement signal.

17. The communication device according to claim 16, wherein there are a plurality of measurement signals, and the processing unit is further configured to discard an echo signal of a first measurement signal when positioning precision at which the second device is supposed to send the first measurement signal is greater than a first threshold, and/or when a moving speed at which the second device is supposed to send the first measurement signal is greater than a second threshold, wherein the first measurement signal is any one of the plurality of measurement signals.

18. The communication device according to claim 16, wherein there are a plurality of measurement signals, and the processing unit is further configured to determine a weight value corresponding to each of a plurality of measurement signals, wherein the weight value is determined based on an error that exists when the second device sends the plurality of measurement signals and/or a moving speed at which the second device is supposed to send the plurality of measurement signals.

19. The communication device according to any one of claims 14 to 18, wherein the first indication information further indicates a positioning capability that the second device needs to meet.

20. The communication device according to claim 19, wherein the receiving unit is further configured to receive feedback information from the second device, wherein the feedback information indicates whether a positioning capability of the second device meets a requirement.

21. A communication device, comprising:

a receiving unit, configured to receive first indication information from a first device, wherein the first indication information indicates a first spatial location at which the communication device is supposed to send a measurement signal, and the first spatial location is evenly distributed in an azimuth direction and/or at an azimuth angle; and
a sending unit, configured to send the measurement signal based on the first indication information, wherein the measurement signal is used to perform imaging on a target.

22. The communication device according to claim 21, wherein the receiving unit is further configured to receive second indication information from the first device, wherein the second indication information indicates an imaging mode, and the imaging mode comprises a strip mode or a spotlight mode.

23. The communication device according to claim 21 or 22, wherein the sending unit is further configured to send state information to the first device, wherein the state information indicates one or more of the following: a second spatial location at which the communication device is supposed to send the measurement signal, positioning precision at which the communication device is supposed to send the measurement signal, or a moving speed at which the communication device is supposed to send the measurement signal.

24. The communication device according to any one of claims 21 to 23, wherein the first indication information further indicates a positioning capability that the communication device needs to meet.

25. The communication device according to claim 24, wherein the sending unit is further configured to send feedback information to the first device, wherein the feedback information indicates whether a positioning capability of the communication device meets a requirement.

26. The communication device according to any one of claims 14 to 25, wherein the first indication information indicates a sampling area and at least one of a sampling interval and a quantity of sampling points, the sampling area indicates an area in which the measurement signal is supposed to be sent, the quantity of sampling points indicates a quantity of times of sending the measurement signal, and the sampling interval indicates an interval between locations at which the measurement signal is supposed to be sent at two adjacent times.

27. A communication device, comprising a memory and a processor, wherein

the memory is configured to store a computer program; and
the processor is configured to invoke the computer program in the memory, to enable the communication device to perform the method according to any one of claims 1 to 7, or enable the communication device to perform the method according to any one of claims 8 to 13.

28. A computer-readable storage medium, wherein the storage medium stores computer-readable instructions, and when the computer-readable instructions are executed by a computer, the method according to any one of claims 1 to 7 or the method according to any one of claims 8 to 13 is implemented.

29. A computer program product, wherein the computer program product comprises computer-readable instructions, and when the computer-readable instructions are run by a computer, the method according to any one of claims 1 to 7 or the method according to any one of claims 8 to 13 is implemented.

30. A chip system, comprising a processor, wherein the processor is configured to perform the method according to any one of claims 1 to 7, or is configured to perform the method according to any one of claims 8 to 13.

31. A communication system, comprising the communication device according to any one of claims 14 to 20 and the communication device according to any one of claims 21 to 26.

FIG. 1

FIG. 2

FIG. 3

400

First device

Second device

S410. First indication information, where the first indication information indicates a first spatial location at which the second device sends a measurement signal

S420. Send the measurement signal based on the first indication information

S430. Receive an echo signal

S440. Perform imaging on a target based on the echo signal

FIG. 4

FIG. 5

FIG. 6

FIG. 7

FIG. 8(a)

FIG. 8(b)

FIG. 9

PSFs, evenly distributed

PSFs, unevenly distributed

FIG. 10

Communication device 1100

Processing unit 1110

Sending unit 1120

Receiving unit 1130

FIG. 11

FIG. 12

FIG. 13

Terminal device 1400

FIG. 14

<table>
<tr><td colspan="2" align="center">INTERNATIONAL SEARCH REPORT</td><td colspan="2">International application No.<br><br>**PCT/CN2023/091644**</td></tr>
</table>

**A.    CLASSIFICATION OF SUBJECT MATTER**

H04W24/08(2009.01)i

According to International Patent Classification (IPC) or to both national classification and IPC

**B.    FIELDS SEARCHED**

Minimum documentation searched (classification system followed by classification symbols)

IPC:H04W24/-

Documentation searched other than minimum documentation to the extent that such documents are included in the fields searched

Electronic data base consulted during the international search (name of data base and, where practicable, search terms used)

CNTXT; WPABSC; ENTXTC; CNKI: 定位, 位置, 方位, 区域, 环境, 成像, 回波, 测量, 均匀, 方位向, 方位角, WPABS; ENTXT; DWPI; 3GPP; IEEE: SAR, ISAC, azimuth direction, azimuth angle, location, position, area, measur+, imag+, echo

**C.    DOCUMENTS CONSIDERED TO BE RELEVANT**

| Category* | Citation of document, with indication, where appropriate, of the relevant passages | Relevant to claim No. |
|---|---|---|
| A | CN 110710230 A (QUALCOMM INC.) 17 January 2020 (2020-01-17)<br>entire document | 1-31 |
| A | CN 109451430 A (HUAWEI TECHNOLOGIES CO., LTD.) 08 March 2019 (2019-03-08)<br>entire document | 1-31 |
| A | CN 112859072 A (BEIJING INSTITUTE OF ENVIRONMENTAL FEATURES) 28 May 2021 (2021-05-28)<br>entire document | 1-31 |
| A | CN 112218328 A (HUAWEI TECHNOLOGIES CO., LTD.) 12 January 2021 (2021-01-12)<br>entire document | 1-31 |
| A | JP 2021032697 A (NIPPON TELEGRAPH & TELEPHONE CORP.) 01 March 2021 (2021-03-01)<br>entire document | 1-31 |

☐ Further documents are listed in the continuation of Box C.          ☑ See patent family annex.

| | | |
|---|---|---|
| *      Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family | |

| Date of the actual completion of the international search | Date of mailing of the international search report |
|---|---|
| **07 July 2023** | **07 July 2023** |

| Name and mailing address of the ISA/CN<br><br>**China National Intellectual Property Administration (ISA/CN)**<br>**China No. 6, Xitucheng Road, Jimenqiao, Haidian District, Beijing 100088** | Authorized officer<br><br><br><br>Telephone No. |
|---|---|

Form PCT/ISA/210 (second sheet) (July 2022)

**INTERNATIONAL SEARCH REPORT**
Information on patent family members

International application No.

**PCT/CN2023/091644**

| Patent document cited in search report | | | Publication date (day/month/year) | Patent family member(s) | | | Publication date (day/month/year) |
|---|---|---|---|---|---|---|---|
| CN | 110710230 | A | 17 January 2020 | US | 2018359603 | A1 | 13 December 2018 |
| | | | | US | 10171943 | B1 | 01 January 2019 |
| | | | | WO | 2018231360 | A1 | 20 December 2018 |
| | | | | IN | 201927045258 | A | 22 November 2019 |
| | | | | CN | 110710230 | B | 03 August 2021 |
| CN | 109451430 | A | 08 March 2019 | CN | 109451430 | B | 14 September 2021 |
| CN | 112859072 | A | 28 May 2021 | None | | | |
| CN | 112218328 | A | 12 January 2021 | WO | 2021004378 | A1 | 14 January 2021 |
| | | | | EP | 3986018 | A1 | 20 April 2022 |
| | | | | EP | 3986018 | A4 | 03 August 2022 |
| JP | 2021032697 | A | 01 March 2021 | US | 2022299620 | A1 | 22 September 2022 |
| | | | | WO | 2021039516 | A1 | 04 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210510596